# EUROPEAN PATENT APPLICATION

(11) **EP 1 906 351 A2**
(43) Date of publication of application: **02.04.2008**
(21) Application number: 07018484.1
(22) Date of filing: 20.09.2007
(51) Int. Cl.: G06Q 30/00

(54) **Print order server, method of controlling same, and control program therefore**

(30) Priority: 27.09.2006 JP 2006261992
(71) Applicant: FUJIFILM Corporation, Minato-ku Tokyo 106-8620 (JP)
(72) Inventor: Maruoka, Diasuke, Minato-ku Tokyo 106-8620 (JP)
(74) Representative: Klunker, Hans-Friedrich

(57) **Abstract**

The object of the invention is to notify a user of the delivery date of a photo print taking a time difference into consideration. When a print has been ordered by a user, the date and time of the order is converted from the time zone of the user to the time zone of the photo laboratory that will print the image. The print completion date and time in the time zone of the laboratory is calculated, and then a provisional delivery date and time in the time zone of a photo shop that will deliver the finished print is calculated. Business starting time is adopted as the delivery time of the print if the provisional delivery date and time is before office hours of the photo shop; the provisional delivery date and time is adopted as the delivery date and time of the print if the provisional delivery date and time is during office hours of the photo shop; and business starting time on the business day that follows the provisional delivery date is adopted as the delivery date and time if the provisional delivery date and time is after business hours of the photo shop.

## Description

### BACKGROUND OF THE INVENTION

### Field of the Invention

This invention relates to a server used in ordering prints, a method of controlling the server and a program for controlling the server.

### Description of the Related Art

A service currently available allows a user to order prints of images utilizing the Internet and to accept delivery of the finished prints. For example, computers located at a number of photo laboratories are connected to the Internet and a laboratory to which a print is to be output is selected based upon order information transmitted from a customer (see the specification of Japanese Patent Application Laid-Open No. 11-154218).

Further, although a service in which a user is notified of dispatch of photographs at the time of dispatch is conceivable, the user does not actually know the date and time at which the photographs will arrive. Furthermore, there are also instances where the user goes to the photo shop to pick up printed photographs. However, if the location where the user lives and the location of the photo shop are in different time zones, the photographs may not be printed by the time the user arrives to pick them up.

### SUMMARY OF THE INVENTION

Accordingly, an object of the present invention is to notify a user of the date and time at which the user may actually take delivery of a finished print.

According to the present invention, the foregoing object is attained by providing a print order server constructing a network print system in which print order data transmitted from a client computer of a user is received at the print order server, the received print order data is transmitted from the print order server to a computer of a laboratory, an image is printed at the laboratory based upon the print order data and a print is dispatched from the laboratory to a photo shop, the print order server comprising: a date and time converting device (means) for converting a transmission date and time of the print order data, which has been transmitted from the client computer of the user, in the time zone of the user to a date and time in the time zone of the laboratory; a print completion date and time calculating device (means) for calculating a print completion date and time in the time zone of the laboratory based upon the date and time in the time zone of the laboratory resulting from the conversion by the date and time converting device; a provisional delivery date and time calculating device (means) for calculating a provisional delivery date and time of a print in the time zone of the photo shop based upon the print completion date and time in the time zone of the laboratory calculated by the print completion date and time calculating device; a determination device (means) for determining whether the provisional delivery date and time calculated by the provisional delivery date and time calculating device is before, during or after business hours of the photo shop; a delivery date and time deciding device (means) for deciding that business starting time on the provisional delivery date calculated by the provisional delivery date and time calculating device is the delivery date and time of the print in response to a determination by the determination device that the calculated provisional delivery date and time is before business hours, deciding that the provisional delivery date and time calculated by the provisional delivery date and time calculating device is the delivery date and time of the print in response to a determination by the determination device that the calculated provisional delivery date and time is during business hours, and deciding that business starting time on the business day that follows the provisional delivery date calculated by the provisional delivery date and time calculating device is the delivery date of the print in response to a determination by the determination device that the calculated provisional delivery date and time is after business hours; and a notifying device (means) for notifying the user of the delivery date and time decided by the delivery date and time deciding device.

The present invention also provides a control method suited to the print order server described above. Specifically, the present invention provides a method of controlling a print order server constructing a network print system in which print order data transmitted from a client computer of a user is received at the print order server, the received print order data is transmitted from the print order server to a computer of a laboratory, an image is printed at the laboratory based upon the print order data and a print is dispatched from the laboratory to a photo shop, the method comprising the steps of: converting a transmission date and time of the print order data, which has been transmitted from the client computer of the user, in the time zone of the user to a date and time in the time zone of the laboratory; calculating a print completion date and time in the time zone of the laboratory based upon the date and time in the time zone of the laboratory resulting from the conversion; calculating a provisional delivery date and time of a print in the time zone of the photo shop based upon the calculated print completion date and time in the time zone of the laboratory; determining whether the calculated provisional delivery date and time is before, during or after business hours of the photo shop; deciding that business starting time on the calculated provisional delivery date is the delivery date and time of the print in response to a determination that the calculated provisional delivery date and time is before business hours, deciding that the calculated provisional delivery date and time is the delivery date and time of the print in response to a determination that the calculated provisional delivery date and time is during business hours, and deciding that business starting time on the business day that follows the calculated provisional delivery date is the delivery date of the print in response to a determination that the calculated provisional delivery date and time is after business hours; and notifying the user of the delivery date and time decided.

The present invention further provides a program for implementing the method of controlling the print order server described above, and a recording medium on which this program has been stored.

In accordance with the present invention, the transmission date and time of print order data, which has been transmitted from a user, in the time zone of the user is converted to a date and time in the time zone of a laboratory. This eliminates a time difference between the time zone of the user and the time zone of the laboratory. The print completion date and time in the time zone of the laboratory is calculated from the date and time in the time zone of the laboratory resulting from the conversion. A provisional delivery date and time of a print in the time zone of the photo shop is calculated based upon the calculated print completion date and time in the time zone of the laboratory. As a result, a time difference between the time zone of the laboratory and the time zone of the photo shop is eliminated. It is determined whether the provisional delivery date and time at the photo shop is before, during or after business hours of the photo shop. If it is before business hours, it is decided that business starting time on the provisional delivery date is the delivery date and time of the print; if it is during business hours, it is decided that the provisional delivery date and time is the delivery date and time of the print; and if it is after business hours, it is decided that business starting time on the business day that follows the provisional delivery date is the delivery date of the print. Since the delivery date and time thus falls within business hours, it is possible to prevent a situation in which the user visits the photo shop to pick up finished prints outside of business hours. The delivery date and time decided is reported to the user as by e-mail, by way of example. Thus the user can be notified of the delivery date and time while taking time zones into account.

The laboratory and the photo shop may be the same, and the time zone of the laboratory and that of the photo shop may be the same.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Fig. 1 illustrates an overview of a network print system according to the present invention;
Fig. 2 is a block diagram illustrating the electrical configuration of a network center;
Fig. 3 illustrate the content of a database;
Fig. 4 is a flowchart illustrating processing executed by the client computer of a user and by the network center;
Fig. 5 illustrates an example of a window displayed on the client computer of the user;
Fig. 6 illustrates an example of a window displayed on the client computer of the user;
Fig. 7 illustrates an example of a window displayed on the client computer of the user;
Fig. 8 is a time chart illustrating time from placement of an order to completion;
Fig. 9 is a table illustrating completion date and time, etc;
Fig. 10 is a time chart illustrating time from placement of an order to completion;
Fig. 11 is a table illustrating completion date and time, etc;
Fig. 12 is a flowchart illustrating processing for calculating delivery date and time;
Fig. 13 is a time chart illustrating time from placement of an order to delivery date and time;
Fig. 14 is a table indicating delivery date and time, etc;
Fig. 15 is a time chart illustrating time from placement of an order to delivery date and time; and
Fig. 16 is a table indicating delivery date and time.

### DESCRIPTION OF THE PREFERRED EMBODIMENT

A preferred embodiment of the present invention will now be described in detail with reference to the drawings.

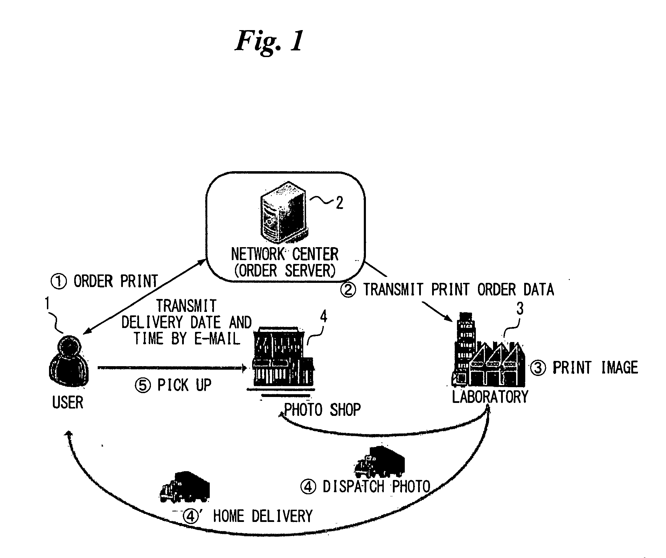

Fig. 1 illustrates an overview of a network print system according to the present invention.

The network print system according to this embodiment is constructed by connecting the client computer of a user 1, a network center (print order server) 2, the computer of a laboratory 3 and the computer of a photo shop 4 to a network such as the Internet. These components are capable of communicating data with one another.

The user 1 accesses the network center 2 using the client computer of the user 1. When the client computer of the user 1 and the network center 2 are connected, print order data is transmitted from the client computer of the user to the network center 2. Upon receiving the print order data, the network center 2 transmits the received print order data to the computer of the laboratory 3. If image data representing an image to be printed has been stored at the network center 2, then the network center 2 transmits the image data to the laboratory 3. If the image data has been stored in the client computer of the user 1, then the image data is transmitted from the client computer of the user 1 to the network center 2 and then from the network center 2 to the laboratory 3. The image is printed at the laboratory 3. The print obtained by printing the image is dispatched from the laboratory 3 to the photo shop 4. The user 1 visits the photo shop 4 to pick up the print. Further, the print obtained by printing the image can also be dispatched from the laboratory 3 to the residence of the user 1.

As will be described later in greater detail, the delivery date and time of the print is calculated at the network center 2. E-mail containing data representing the calculated delivery date and time is transmitted from the network center 2 to the client computer of the user 1. By thus notifying the user of the delivery date and time, the user can visit the photo shop 4 to pick up the print on the delivery date and time.

In a case where there is a time-zone boundary between the location of the user 1 and the location of the photo shop 4 (the time zone is a region-by- region standard time zone), the time zone at the location of the user 1 and the time zone at the location of the photo shop 4 will differ. Unless this time difference is taken into consideration, therefore, the print may not have been dispatched to the photo shop 4 when the user visits the photo shop to pick up the print. In this embodiment, it is so arranged that an accurate delivery date and time can be reported to the user even in a case where there is a time difference between the location of the user 1 and the location of the photo shop 4.

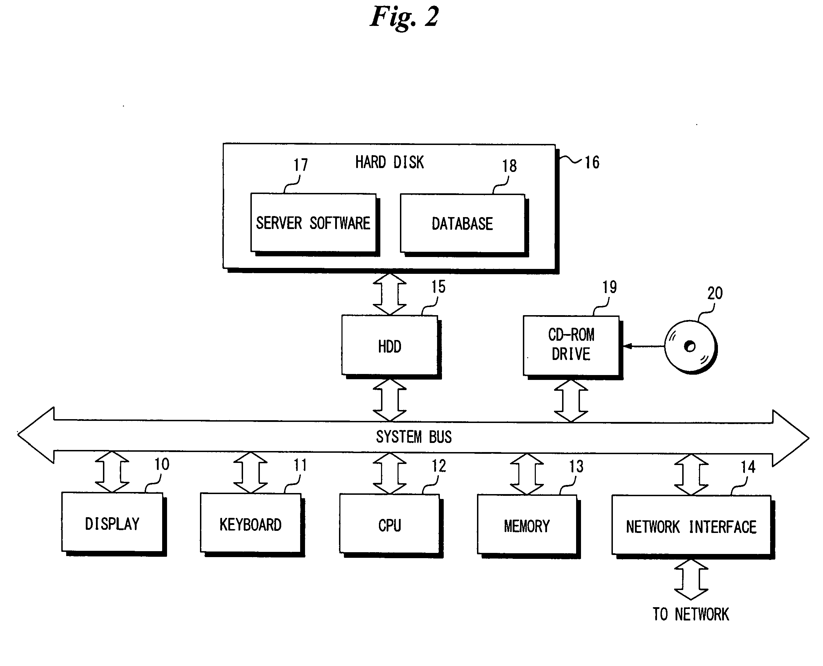

Fig. 2 is a block diagram illustrating the electrical configuration of the network center 2.

The overall operation of the network center 2 is controlled by a CPU 12.

The network center 2 includes a CD-ROM (Compact Disk - Read-Only ROM) drive 19. If a CD-ROM 20 containing server software 17 for controlling operation (described later) is loaded in the CD-ROM drive 19, server software 17 is installed on a hard disk 16. In addition to the server software 17, a database 18 is also stored on the hard disk 16. The server software 17, etc., stored on the hard disk 16 is accessed by a hard-disk drive 15.

The network center 2 further includes a display unit 10 for displaying images, a keyboard 11 for inputting commands and the like, a memory 13 for storing data and the like temporarily, and a network interface 14 for connection to the network.

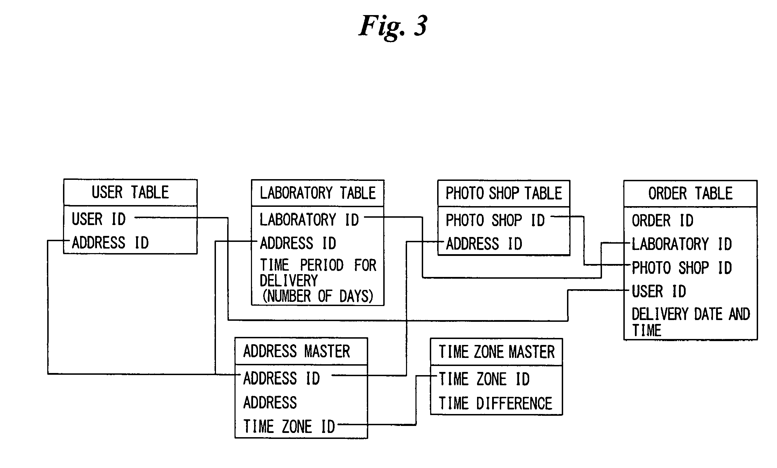

Fig. 3 illustrates an example of the database 18.

The database 18 contains a user table, an address master, a time zone master, a laboratory table, a photo shop table and an order table.

The user table manages information regarding users who utilize the network print system and contains user IDs and address IDs. The user table also contains passwords of the users. The address master manages the addresses of the users and contains address IDs, data indicating addresses and time zone IDs. The time zone master manages information relating to time zones and contains time zone IDs and data indicating time differences. The laboratory table manages information regarding laboratories and contains laboratory IDs, address IDs and data indicating time period for delivery. The photo shop table contains photo shop IDs and address IDs. The order table manages information relating to orders from the users and contains order IDs, laboratory IDs, photo shop IDs, user IDs and delivery dates and times. The database 18 further contains the addresses and telephone numbers of the photo shops and fees on a shop-by-shop basis.

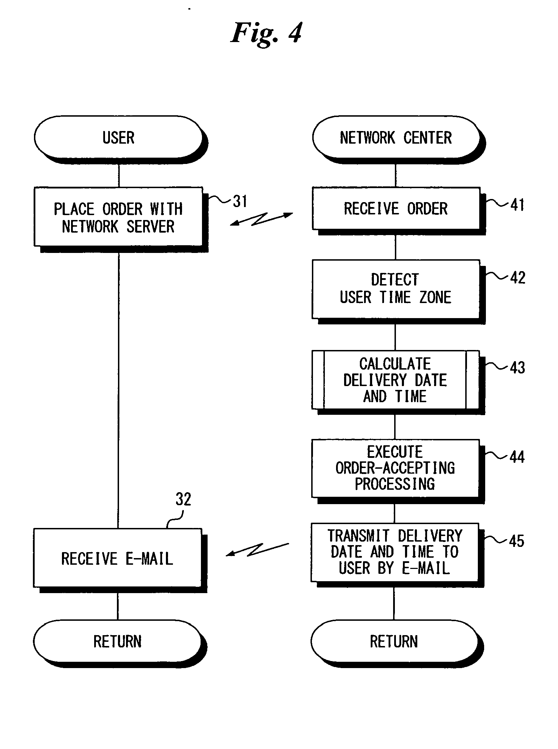

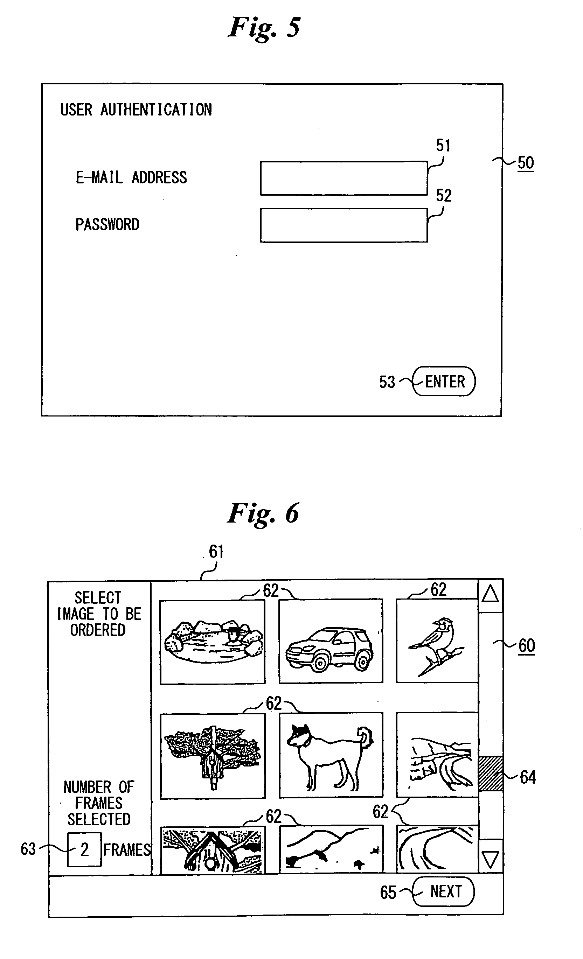

Fig. 4 is a flowchart illustrating processing executed by the client computer of the user 1 and by the network center 2. Figs. 5 to 7 are examples of windows displayed on the display screen of the client computer of user 1.

When the network center 2 is accessed by the client computer of the user 1, a user authentication window 50 shown in Fig. 5 is displayed on the display screen of the client computer. A user who utilizes the network print system is registered in the network center 2 beforehand, and user information is stored on the database 18.

Displayed in the user authentication window 50 are a section 51 for displaying an e-mail address, a section 52 for displaying a password, and an ENTER button 53. The section 51 displays the user e-mail address entered by the user 1. Although the e-mail address itself (or a part of the address) serves as the user ID, it goes without saying that information different from an e-mail address may serve as a user ID. The section 52 displays the password entered by the user 1. The password has been stored in the user table, as mentioned above. If the ENTER button 53 is clicked, the e-mail address and password are transmitted to the network center 2. If these are authenticated, an ordered-image selection window 60 shown in Fig. 6 is displayed on the display screen of the client computer.

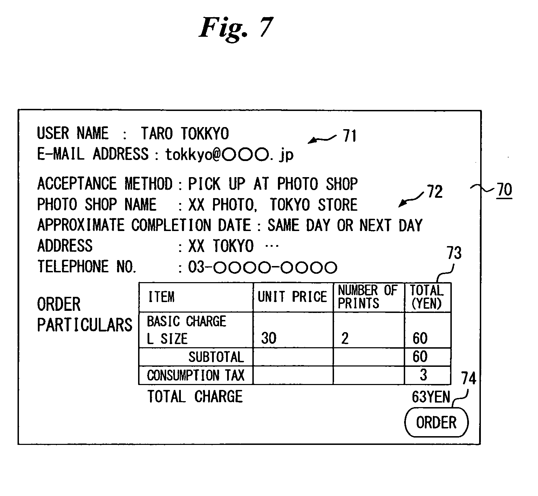

The ordered-image selection window 60 includes a thumbnail-image display area 61, a section 63 for displaying the number of frames selected, a slide bar 64 and NEXT button 65. Thumbnail images 62 of images represented by image data that has been stored in the client computer are being displayed in the thumbnail-image display area 61. As mentioned above, prints of images represented by the image data that has been stored in the network center 2 can also be ordered. In this case, image data that has been stored in the network center 2 is transmitted to the client computer of the user 1 and a thumbnail image of the image represented by the received image data is displayed in the thumbnail-image display area 61. By moving the slide bar 64 up or down, scrolling is performed and new thumbnail images come into view in the thumbnail-image display area 61. By clicking a thumbnail image 62, the image to be printed is selected and the number of frames displayed in the section 63 for displaying the number of selected frames is incremented. If the NEXT button is clicked, image data representing the image to be ordered is transmitted from the client computer of user 1 to the network center 2. When this occurs, order confirmation data is transmitted from the network center 2 to the client computer of user 1 and an order confirmation window 70 shown in Fig. 7 is displayed.

The order confirmation window 70 includes a user information display area 71 for displaying user name and user e-mail address, an area 72 in which information regarding acceptance of an order is displayed, an area 73 in which the particulars of the order are displayed, and an order button 74. Information regarding the acceptance of an order includes the method of accepting delivery of a print, the name of the photo shop, approximate completion date, address of the photo shop and telephone number. The printing fee is displayed in the order particulars 73. If the order button 74 is clicked, an order command is transmitted from the client computer of user 1 to the network center 2.

Thus, information relating to an order is transmitted from the client computer of user 1 to the network center 2 (step 31) and is received by the network center 2 (step 41).

User ID and user address have been registered previously in the network center 2, as mentioned earlier. The time zone of the location where the user 1 resides is detected from these items of information (step 42). The delivery date and time of the print at the photo shop specified by the user is calculated using the time zone, etc., of the user's location (step 43). The details of this calculation processing will be described later. Prescribed order-accepting processing is then executed (step 44) and the calculated delivery date and time is transmitted from the network center 2 to the client computer of user 1 using e-mail (step 45).

The client computer of user 1 receives the e-mail transmitted from the network center 2 (step 32). By viewing the e-mail transmitted from the network center 2, the user 1 can determine the date and time to visit the photo shop 4 in order to pick up the print.

Described next will be a problem that arises when a time difference ascribable to a difference in time zones is not adjusted for in a case where the time zone at the location of user 1, the time zone of the photo shop 4 which the user 1 visits to pick up the print and the time zone of the laboratory 3 are different from one another.

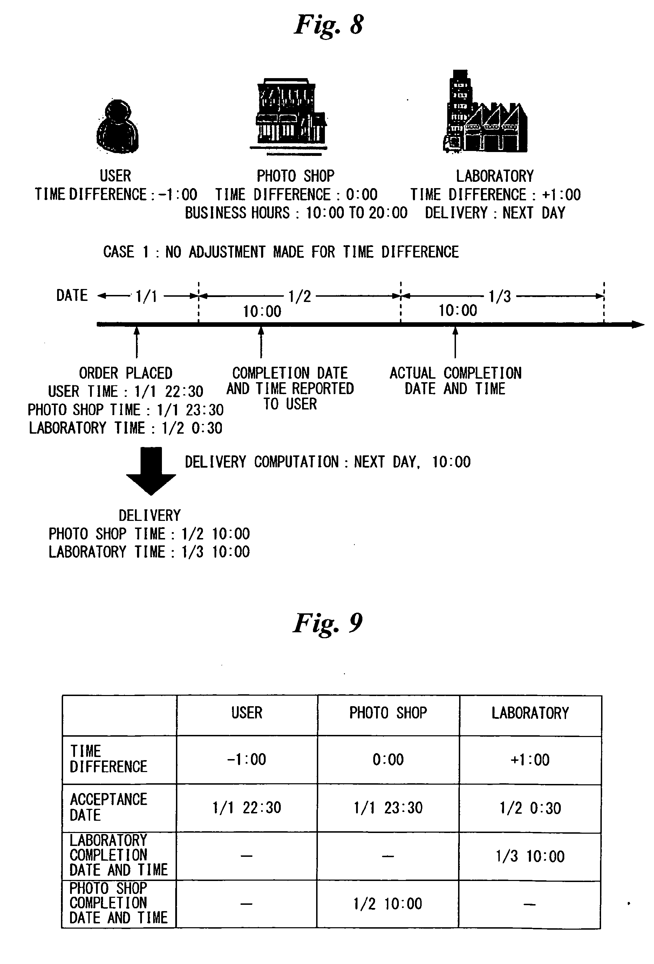

Fig. 8 is a time chart illustrating date and time of an order placed by the user 1 as well as completion date and time, etc., and Fig. 9 is a table illustrating these dates and times.

Here it will be assumed that the time zone at the location of the photo shop 4 is the reference, that the location of user 1 has a time difference of -1 hour relative to the time zone of the photo shop 4, and that the location of the laboratory 3 has a time difference of +1 hour relative to the time zone of the photo shop 4. Further, assume that the business hours of the photo shop 4 are 10:00 to 20:00. Furthermore, assume that the print completion date and time of an image at the laboratory 3 (the laboratory completion date and time) and the date and time, ascertained by the photo shop 4, at which the print will be dispatched from the laboratory 3 (the photo shop completion date and time) are each 10:00 on the day following the date and time at which the print order was accepted from the user 1 by the network center 2.

Assume that the user places the order and that the order is accepted by the network center 2 at 22:30 on January 1st (user time). Since the time zone of user 1 is one hour ahead of the time zone of photo shop 4 (the time difference at the user location is -1 hour), at the photo shop 4 the date and time at which the user 1 placed the order is 23:30 on January 1^{st} (photo shop time). Therefore, the image print completion date and time ascertained at the photo shop 4 (the photo shop completion date and time) is 10:00 on January 2^{nd}, which is the day after January 1^{st}. Since the time zone of the laboratory is one hour behind the time zone of the photo shop 4 (the time difference at the laboratory is +1 hour), the date and time at which the user 1 placed the order is 0:30 on January 2^{nd} (laboratory time) at the laboratory 3. Therefore, the image print completion time at the laboratory 3 is 10:00 on January 3^{rd}, which is the day after January 2^{nd}. Thus, the completion date and time at the laboratory 3 and the completion date and time at the photo shop 4 differ. If the completion date and time at the photo shop 4 is reported to the user 1 and the user 1 visits the photo shop 4 to pick up the print on the completion date and time at the photo shop 4, the print may not have been dispatched to the photo shop 4.

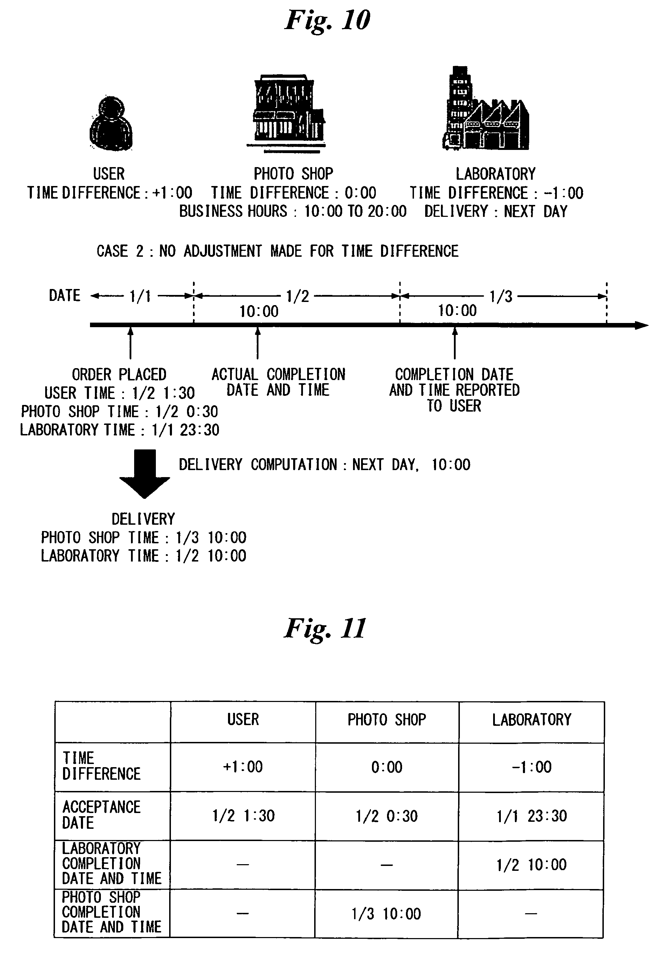

Fig. 10 is a time chart illustrating date and time of an order placed by the user 1 as well as completion date and time, etc., and Fig. 11 is a table illustrating these dates and times. These diagrams will be used to describe another example.

In this case also it will be assumed that the time zone at the location of the photo shop 4 is the reference, that the location of user 1 has a time difference of +1 hour relative to the time zone of the photo shop 4, and that the location of the laboratory 3 has a time difference of -1 hour relative to the time zone of the photo shop 4. Further, in a manner similar to that described above, assume that the print completion date and time of an image at the laboratory 3 (the laboratory completion date and time) and the date and time, ascertained by the photo shop 4, at which the print will be dispatched from the laboratory 3 (the photo shop completion date and time) are each 10:00 on the day following the date and time at which the print order was accepted from the user 1 by the network center 2.

Assume that the user places the order and that the order is accepted by the network center 2 at 1:30 on January 2^{nd} (user time). Since the time zone of user 1 is one hour behind the time zone of photo shop 4 (the time difference at the user location is +1 hour), at the photo shop 4 the date and time at which the user 1 placed the order is 0:30 on January 2^{nd} (photo shop time). Therefore, the image print completion date and time ascertained at the photo shop 4 (the photo shop completion date and time) is 10:00 on January 3^{rd}, which is the day after January 2^{nd}. Since the time zone of the laboratory is one hour ahead of the time zone of the photo shop 4 (the time difference at the laboratory is -1 hour), the date and time at which the user 1 placed the order is 23:30 on January 1^{st} (laboratory time) at the laboratory 3. Therefore, the image print completion time at the laboratory 3 is 10:00 on January 2^{nd}, which is the day after January 1^{st}. Thus, the completion date and time at the laboratory 3 and the completion date and time at the photo shop 4 differ. If the completion date and time of January 3^{rd}, 10:00 at the photo shop 4 is reported to the user 1, the user will not visit the photo shop 4 to pick up the print until January 3^{rd}, 10:00 arrives despite the fact that the print will be ready at 10:00 on January 2^{nd}, which is the previous day. This means that the user cannot be provided with a rapid print service.

This embodiment solves these problems.

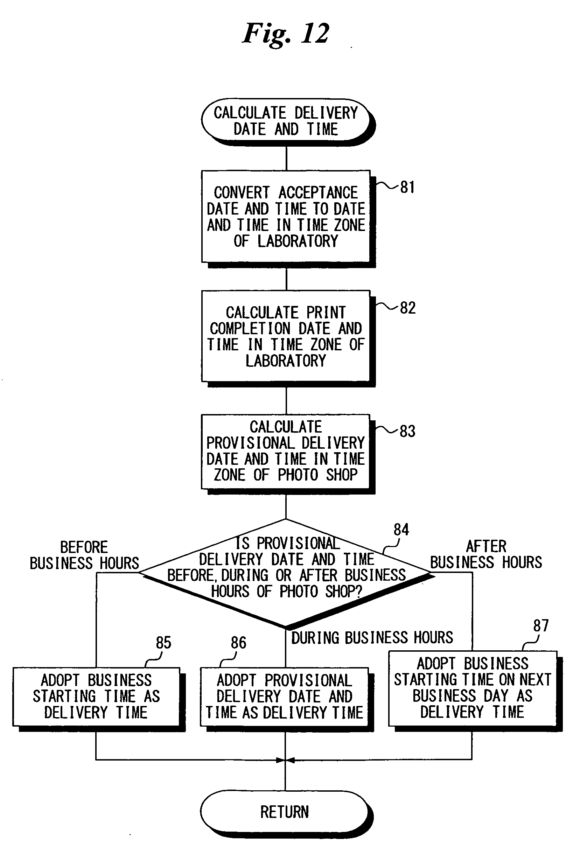

Fig. 12 is a flowchart illustrating processing for calculating delivery date and time (the processing at step 43 in Fig. 4).

The date and time of acceptance of an order (order transmission date and time; order reception date and time) in the time zone of the user is converted to the date and time in the time zone of the laboratory 3 (step 81) by the network center 2. It will suffice if the acceptance date and time in the time zone of the user 1 is converted to the date and time in the time zone of the laboratory 3 irrespective of the time zone of the network center 2. As a result of the conversion, the time difference between the time zone of user 1 and the time zone of laboratory 3 is eliminated.

Next, the print completion date and time in the time zone of the laboratory 3 is calculated (step 82). The print completion date and time is the time at which business hours start on the day following the acceptance date and time obtained by the conversion to the time zone of the laboratory 3. Furthermore, a provisional delivery date and time of the print at the photo shop is calculated (step 83). To obtain the provisional delivery date and time, the time difference between time zone of the laboratory 3 and the time zone of the photo shop 4 need only be added to the print completion date and time at the laboratory 3. This eliminates the time difference between the time zone of the laboratory 3 and the time zone of the photo shop 4.

It is determined whether the calculated provisional delivery date and time is before, during or after business hours (step 84). If it is before business hours, then business starting time becomes the delivery date and time of the print (step 85). If it is during business hours, then the provisional delivery time becomes the delivery time (step 86). If it is after business hours, then business starting time on the next business day becomes the delivery time (step 87). As a result, it is possible to prevent a situation in which the user 1 visits the photo shop 4 to pick up the print outside of business hours. The calculated delivery time is reported to the user 1 using e-mail, as described earlier.

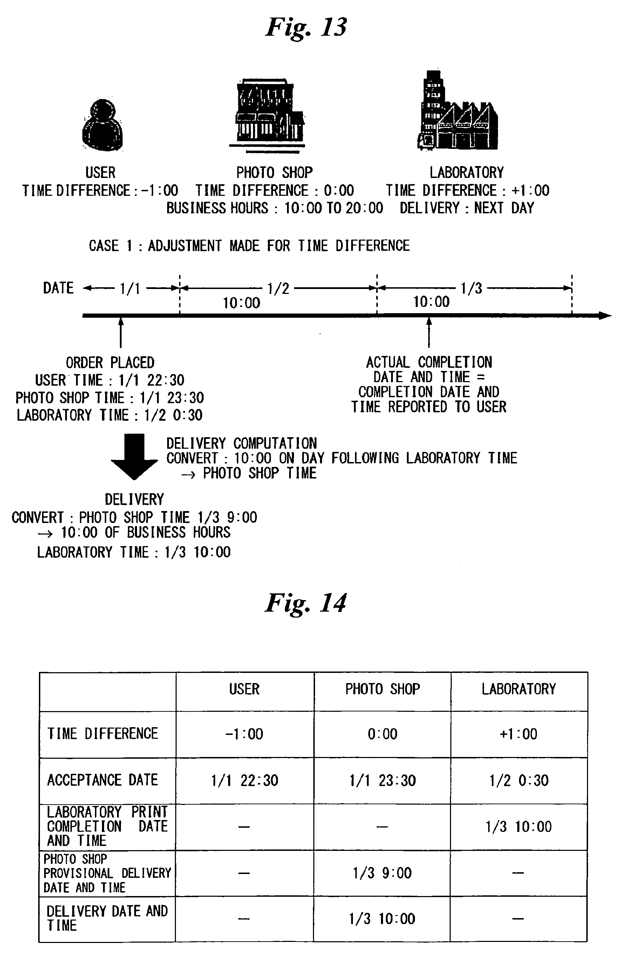

Fig. 13, which corresponds to Fig. 8, is a time chart illustrating date and time of an order placed by the user 1 as well as completion date and time, etc. Fig. 14, which corresponds to Fig. 9, is a table illustrating these dates and times. Reference will be had to Figs. 13 and 14 to describe a specific example in which the user 1 is notified of a delivery date and time from which a time difference has been eliminated.

In a manner similar to that described above with reference to Figs. 8 and 9, it will be assumed that the time zone at the location of the photo shop 4 is the reference, that the location of user 1 has a time difference of -1 hour relative to the time zone of the photo shop 4, and that the location of the laboratory 3 has a time difference of +1 hour relative to the time zone of the photo shop 4. Further, assume that the business hours of the photo shop 4 are 10:00 to 20:00. Furthermore, assume that the print completion date and time of an image at the laboratory 3 and the date and time, ascertained by the photo shop 4, at which the print will be dispatched from the laboratory 3 are each 10:00 on the day following the date and time at which the print order was accepted from the user 1 by the network center 2.

In a manner similar to that described above, assume that the user places the order and that the order is accepted by the network center 2 at 22:30 on January 1st (user time). Since the time zone of user 1 is one hour ahead of the time zone of photo shop 4 (the time difference at the user location is -1 hour), at the photo shop 4 the date and time at which the user 1 placed the order is 23:30 on January 1^{st} (photo shop time). Therefore, the image print completion date and time ascertained at the photo shop 4 (the photo shop completion date and time) is 10:00 on January 2^{nd}, which is the day after January 1^{st}. Since the time zone of the laboratory is one hour behind the time zone of the photo shop 4 (the time difference at the laboratory is +1 hour), the date and time at which the user 1 placed the order is 0:30 on January 2^{nd} (laboratory time) at the laboratory 3 (conversion of acceptance date and time to the date and time in the time zone of laboratory 3).

Since the print completion date and time in the time zone of the laboratory 3 is 10:00 on the day following the acceptance date and time, this is 10:00 on January 3^{rd}, which is the day after January 2^{nd}, just as described earlier. Since the provisional delivery date and time in the time zone of the photo shop 4 is obtained by subtracting the time difference between the laboratory 3 and photo shop 4 from the print completion date and time of the laboratory, the provisional delivery date and time is 9:00 on January 3^{rd}. The user 1 is notified of this delivery date and time. Since the print will have been dispatched to the photo shop 4 from the laboratory 3 at the delivery date and time (it goes without saying that the above-mentioned print completion date and time, provisional delivery date and time and delivery date and time, etc., will have been calculated taking the time necessary for dispatch into consideration as well), the user 1 can visit the photo shop 4 to pick up the print on the delivery date and time.

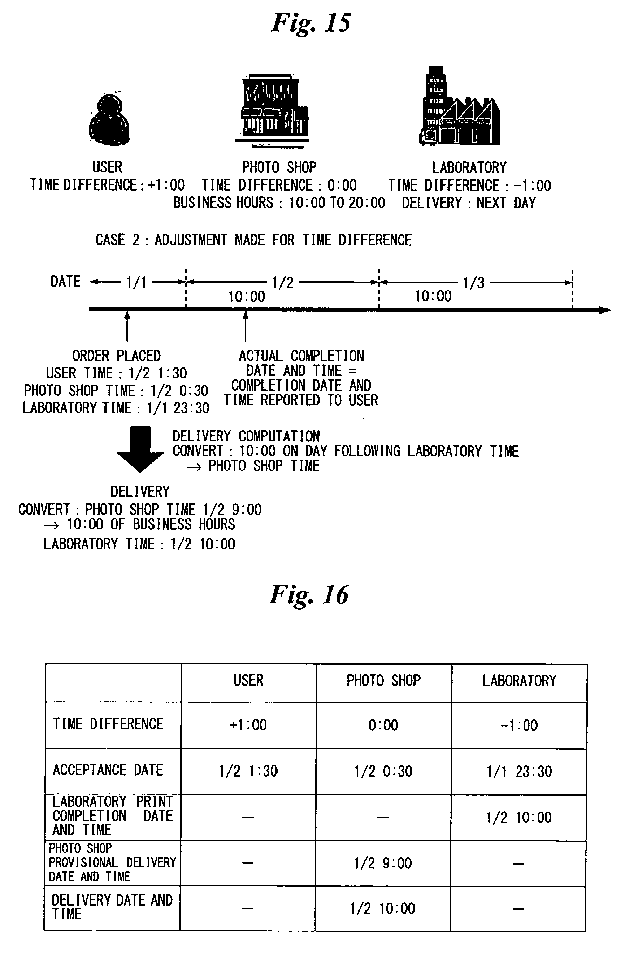

Figs. 15 and 16 illustrate another example. Fig. 15, which corresponds to Fig. 10, is a time chart illustrating date and time of an order placed by the user 1 as well as completion date and time, etc. Fig. 16, which corresponds to Fig. 11, is a table illustrating these dates and times.

In this case also, in a manner similar to that described above, it will be assumed that the time zone at the location of the photo shop 4 is the reference, that the location of user 1 has a time difference of +1 hour relative to the time zone of the photo shop 4, and that the location of the laboratory 3 has a time difference of -1 hour relative to the time zone of the photo shop 4. Further, in a manner similar to that described above, assume that the print completion date and time of an image at the laboratory 3 (the laboratory completion date and time) and the date and time, ascertained by the photo shop 4, at which the print will be dispatched from the laboratory 3 (the photo shop completion date and time) are each 10:00 on the day following the date and time at which the print order was received from the user 1 by the network center 2.

Assume that the user places the order and that the order is accepted by the network center 2 at 1:30 on January 2^{nd} (user time). Since the time zone of user 1 is one hour behind the time zone of photo shop 4 (the time difference at the user location is +1 hour), at the photo shop 4 the date and time at which the user 1 placed the order is 0:30 on January 2^{nd} (photo shop time), as described earlier. Since the time zone of the laboratory is one hour ahead of the time zone of the photo shop 4 (the time difference at the laboratory is -1 hour), the date and time at which the user 1 placed the order is 23:30 on January 1^{st} (laboratory time) at the laboratory 3 (conversion of acceptance date and time to the date and time in the time zone of laboratory). The image print completion date and time at the laboratory 3 is 10:00 on January 2^{nd}, which is the day after January 1^{st}. The provisional delivery date and time at the photo shop 4 is 9:00 on January 2^{nd}. The delivery date and time is 10:00 on January 2^{nd} and is reported to the user 1. The user 1 can visit the photo shop 4 to pick up the print at 10:00 on January 2^{nd}, which is the day preceding January 3^{rd}.

In the embodiment described above, the provisional delivery date and time is assumed to be before office hours. However, the provisional delivery date and time is calculated in similar fashion even if it is during or after business hours, and the user is notified of this delivery date and time.

Further, in the foregoing embodiment, a case in which the time zone of the laboratory 3 and the time zone of the photo shop 4 are different has been described. However, it should be readily understood that the delivery date and time can be calculated in similar fashion in a case where these time zones are identical and in a case where the laboratory 3 and photo shop 4 are the same.

Furthermore, in the foregoing embodiment, the user 1 is notified of the delivery time in a case where the user 1 visits the laboratory 3 to pick up a print. However, it goes without saying that notification of dispatch date and time (date and time of arrival at the residence of the user 1) can be given also in a case where the print is dispatched from the laboratory 3 to the residence of the user 1.

As many apparently widely different embodiments of the present invention can be made without departing from the spirit and scope thereof, it is to be understood that the invention is not limited to the specific embodiments thereof except as defined in the appended claims.

## Claims

1. A print order server constructing a network print system in which print order data transmitted from a client computer of a user is received at the print order server, the received print order data is transmitted from the print order server to a computer of a laboratory, an image is printed at the laboratory based upon the print order data and a print is dispatched from the laboratory to a photo shop, said print order server comprising:
a date and time converting device for converting a transmission date and time of the print order data, which has been transmitted from the client computer of the user, in the time zone of the user to a date and time in the time zone of the laboratory;
a print completion date and time calculating device for calculating a print completion date and time in the time zone of the laboratory based upon the date and time in the time zone of the laboratory resulting from the conversion by said date and time converting device;
a provisional delivery date and time calculating device for calculating a provisional delivery date and time of a print in the time zone of the photo shop based upon the print completion date and time in the time zone of the laboratory calculated by said print completion date and time calculating device;
a determination device for determining whether the provisional delivery date and time calculated by said provisional delivery date and time calculating device is before, during or after business hours of the photo shop;
a delivery date and time deciding device for deciding that business starting time on the provisional delivery date calculated by said provisional delivery date and time calculating device is the delivery date and time of the print in response to a determination by said determination device that the calculated provisional delivery date and time is before business hours, deciding that the provisional delivery date and time calculated by said provisional delivery date and time calculating device is the delivery date and time of the print in response to a determination by said determination device that the calculated provisional delivery date and time is during business hours, and deciding that business starting time on the business day that follows the provisional delivery date calculated by said provisional delivery date and time calculating device is the delivery date and time of the print in response to a determination by said determination device that the calculated provisional delivery date and time is after business hours; and
a notifying device for notifying the user of the delivery date and time decided by said delivery date and time deciding device.

2. The print order server according to claim 1, wherein the laboratory and the photo shop may be the same or the time zone of the laboratory and the time zone of the photo shop are the same.

3. A method of controlling a print order server constructing a network print system in which print order data transmitted from a client computer of a user is received at the print order server, the received print order data is transmitted from the print order server to a computer of a laboratory, an image is printed at the laboratory based upon the print order data and a print is dispatched from the laboratory to a photo shop, said method comprising the steps of:
converting a transmission date and time of the print order data, which has been transmitted from the client computer of the user, in the time zone of the user to a date and time in the time zone of the laboratory;
calculating a print completion date and time in the time zone of the laboratory based upon the date and time in the time zone of the laboratory resulting from the conversion;
calculating a provisional delivery date and time of a print in the time zone of the photo shop based upon the calculated print completion date and time in the time zone of the laboratory;
determining whether the calculated provisional delivery date and time is before, during or after business hours of the photo shop;
deciding that business starting time on the calculated provisional delivery date is the delivery date and time of the print in response to a determination that the calculated provisional delivery date and time is before business hours, deciding that the calculated provisional delivery date and time is the delivery date and time of the print in response to a determination that the calculated provisional delivery date and time is during business hours, and deciding that business starting time on the business day that follows the calculated provisional delivery date is the delivery date and time of the print in response to a determination that the calculated provisional delivery date and time is after business hours; and
notifying the user of the delivery date and time decided.

4. A program of a print order server constructing a network print system in which print order data transmitted from a client computer of a user is received at the print order server, the received print order data is transmitted from the print order server to a computer of a laboratory, an image is printed at the laboratory based upon the print order data and a print is dispatched from the laboratory to a photo shop, said program controlling said print order server so as to;
convert a transmission date and time of the print order data, which has been transmitted from the client computer of the user, in the time zone of the user to a date and time in the time zone of the laboratory;
calculate a print completion date and time in the time zone of the laboratory based upon the date and time in the time zone of the laboratory resulting from the conversion;
calculate a provisional delivery date and time of a print in the time zone of the photo shop based upon the calculated print completion date and time in the time zone of the laboratory;
determine whether the calculated provisional delivery date and time is before, during or after business hours of the photo shop;
decide that business starting time on the calculated provisional delivery date is the delivery date and time of the print in response to a determination that the calculated provisional delivery date and time is before business hours, decide that the calculated provisional delivery date and time is the delivery date and time of the print in response to a determination that the calculated provisional delivery date and time is during business hours, and decide that business starting time on the business day that follows the calculated provisional delivery date is the delivery date and time of the print in response to a determination that the calculated provisional delivery date and time is after business hours; and
notify the user of the delivery date and time decided.

5. A recording medium on which the program set forth in claim 4 has been stored.
